# EUROPEAN PATENT SPECIFICATION

(11) **EP 2 019 519 B1**
(45) Date of publication and mention of the grant of the patent: **06.07.2011**
(21) Application number: 07014620.4
(22) Date of filing: 25.07.2007
(51) Int. Cl.: H04L 12/46, H04Q 11/00

(54) **Method for addressing ethernet streams with a structured GPON GEM Port ID**
Verfahren zur Adressierung von Ethernetströmen mit strukturierter GPON-GEM-Port-ID
Procédé pour l'adressage de flux Ethernet avec une id de port gem gpon structurée

(43) Date of publication of application: 28.01.2009
(73) Proprietor: Nokia Siemens Networks Oy, 02610 Espoo (FI)
(72) Inventor: Lüpke, Ralf, 17489 Greifswald (DE); Rehberg, Reinhard, Dr., 17495 Sanz (DE); Reichenbach, Stefan, 17498 Greifswald (DE); Roeser, Wieland, 17498 Behrenhoff (DE); Schmidtke, Uwe, 17493 Greifswald (DE)
(74) Representative: Bruglachner, Thomas E.

(56) References cited:
- "Gigabit-capable Passive Optical Networks (G-PON): Transmission convergence layer specification; G.984.3 (02/04)" ITU-T STANDARD IN FORCE (I), INTERNATIONAL TELECOMMUNICATION UNION, GENEVA,, CH, no. G9843 2/4, 22 February 2004 (2004-02-22), XP017401196

## Description

### Technical Field

The present invention relates to an implementation in an OLT as part of a GPON network and to a method for addressing Ethernet streams by means of a structured GPON GEM Port ID, in particular.

### Background Art

According to the preamble part of claim 1, the invention relates to a method for addressing Ethernet streams by means of a structured GEM Port ID, wherein an implementation in an OLT as part of a GPON network is provided. In a GPON network, between an ONT and the OLT, an Ethernet frame is transported, the Ethernet frame is encapsulated in a GEM layer and the Ethernet frame is addressed in a GEM header, through a GEM port ID.

Such a method is known in the prior art. Here, an implementation in an OLT as part of a GPON network corresponding to ITU-T Standard G.984 is known. In such a PON network, between ONT and OLT, Ethernet frames are transported amongst others. These Ethernet frames are encapsulated in the PON (14), in the so called GEM layer. These GEM frames are addressed in the GEM header, amongst others, through a GEM port ID.

Corresponding to ITU-T Standard G.984 a GEM port represents a traffic-flow. In the case of ATM, this traffic-flow is comparable to a VCC.

In the case of Ethernet the mapping is not so unique. Ethernet knows MAC addresses in order to address source and target of a frame. Layer 2 networks furthermore can be separated logically into so called VLAN according to 802.1q. Every VLAN is addressed through a VLAN-ID. This VLAN-ID is stored in an additional tag and is also taken into account for the addressing. Also part of this tag is the priority information according to 802.1q in the priority field, in the following also called priority bits. That is in the case of Ethernet a traffic flow is characterized by the addressing, a combination of MAC address and/or VLAN-ID and by the prioritization, which is stored in the priority bits.

Each implementation in the ONT, for choosing the correct GEM port in upstream direction (ONT to OLT) can be different. As criteria for the choice of the GEM port can e.g. be the switch-port, the VCC in the case of EoATM ("Metro Ethernet Services over ATM Networks"), the VLAN-ID and the priority bits taken into account. This is also very dependent on the chosen functional separation between aggregation switch and GPON-layer.

A PON, which is short for Passive Optical Network, comprises a high-bandwidth, point-to-multipoint optical fiber network based on the asynchronous transfer mode protocol (ATM), Ethernet or TDM. PONs generally consist of an OLT (Optical Line Termination), which is connected to ONUs (Optical Network Units), aka subscriber terminals, using only fibre cables, optical splitters and other passive components (do not transmit signals using electricity). Up to 32 ONUs can be connected to an OLT. PONs are capable of delivering high volumes of upstream and downstream bandwidth (up to 622 Mbps downstream and 155 Mbps upstream), which can be changed "on-the-fly" depending on an individual user's needs. The OLT is located at a local exchange, and the ONU is located either on the street, in a building, or even in a user's home. ITU-T G.984 is a standard, which describes GPON (Gigabit PON), which is an evolution of the BPON standard. It supports higher rates, enhanced security, and choice of Layer 2 protocol (ATM, GEM, Ethernet ). In actuality, ATM has not been implemented.

The ITU-T G.984 (GPON) standard represents a boost in both the total bandwidth and bandwidth efficiency through the use of larger, variable-length packets. Again, the standards permit several choices of bit rate, but the industry has converged on 2,488 Mbits per second (Mbit/s) of downstream bandwidth, and 1,244 Mbit/s of upstream bandwidth. GPON Encapsulation Method (GEM) allows very efficient packaging of user traffic, with frame segmentation to allow for higher Quality of Service (QoS) for delay-sensitive traffic such as voice and video communications. A frame describes here a packet of transmitted information.

A PON consists of a central office node, called an optical line terminal (OLT, 13), one or more user nodes, called optical network units (ONUs) or optical network terminals (ONTs), and the fibers and splitters between them, called the optical distribution network (ODN). An ONT is a single integrated electronics unit, while an ONU is a shelf with plug-in circuit packs. In practice, the difference is frequently ignored, and either term is used generically to refer to both classes of equipment.

An OLT provides the interface between the PON and the backbone network. These typically include standard time division multiplexed (TDM) interfaces such as SONET/SDH or PDH at various rates, Internet Protocol (IP) traffic over Gigabit or 100 Mbit/s Ethernet and ATM UNI at 155-622 Mbit/s.

An ONT terminates the PON and presents the native service interfaces to the user. These services can include voice (plain old telephone service (POTS) or voice over IP - VoIP), data (typically Ethernet or V.35), video, and/or telemetry (TTL, ECL, RS530, etc.). Often, the ONT functions are separated into two parts, namely the ONU, which terminates the PON and presents a converged interface - such as xDSL or multiservice Ethernet - toward the user, and network termination equipment (NTE), which provides the separate, native service interfaces directly to the user.

A PON is a converged network, in that all of these services are typically converted and encapsulated in a single packet type for transmission over the PON fiber. BPON is ATM-based. EPON is Ethernet -based. Although GPON allows for a mix of TDM, ATM and Ethernet mode, Ethernet is the usual transport mechanism.

A PON is a shared network, in that the OLT sends a single stream of downstream traffic that is seen by all ONTs. Each ONT only reads the content of those packets that are addressed to it. Encryption is used to prevent eavesdropping on downstream traffic.

The upstream bandwidth allocation describes how in SR DBA, the OLT polls ONTs for their backlogs. A given ONT may have several so-called traffic containers (T-CONTs), each with its own priority or traffic class. The ONT reports each T-CONT separately to the OLT. The report message contains a logarithmic measure of the backlog in the T-CONT queue. By knowledge of the service level agreement for each T-CONT across the entire PON, as well as the size of each T-CONT's backlog, the OLT can optimize allocation of the spare bandwidth on the PON.

Both APON/BPON and EPON/GEPON have been deployed on a large scale in many networks around the world. The ITU G.984 GPON standard has been "finalized" more recently, and is in lab and field trials in the US, Europe, and Asia-Pacific regions, with mass deployment scheduled to begin in 2007 by large service providers such as British Telecom, Verizon, as well as many others. Deployment of PON - or any fundamentally new infrastructure - has been constrained by the pace of protocol standardization, equipment availability and cost, conservatism in moving to new technology, but most importantly by the cost of installing new fiber all the way to customer sites. Some service providers are deploying PON ONUs as outside plant equipment in existing or new outside plant enclosures, using asymmetrical digital subscriber line (ADSL) or very high speed DSL (VDSL2) links over existing copper twisted pairs to the subscriber premises to avoid the cost of the last leg. This strategy provides high bandwidth services, but does not maximize the operational cost savings that are possible with a 100% passive outside plant.

A GEM is a graphical user interface developed by Digital Research. It is built into personal computers made by Atari, and is also used as an interface for some DOS programs. Like the Macintosh interface and Microsoft Windows, GEM provides a windowed environment for running programs.

A port can be either an interface on a computer to which you can connect a device. Personal computers have various types of ports. Internally, there are several ports for connecting disk drives, display screens, and keyboards. Externally, personal computers have ports for connecting modems, printers, mice, and other peripheral devices. Or in TCP/IP and UDP networks, a port is an endpoint to a logical connection. The port number identifies what type of port it is. For example, port 80 is used for HTTP traffic.

The OSI, or Open System Interconnection, model defines a networking framework for implementing protocols in seven layers. Control is passed from one layer to the next, starting at the application layer in one station, proceeding to the bottom layer, over the channel to the next station and back up the hierarchy.

At the Data Link (Layer 2) layer, data packets are encoded and decoded into bits. It furnishes transmission protocol knowledge and management and handles errors in the physical layer, flow control and frame synchronization. The data link layer is divided into two sublayers: The Media Access Control (MAC) layer and the Logical Link Control (LLC) layer. The MAC sublayer controls how a computer on the network gains access to the data and permission to transmit it. The LLC layer controls frame synchronization, flow control and error checking.

In many disciplines of computer science, a header is a unit of information that precedes a data object. In a network transmission, a header is part of the data packet and contains transparent information about the file or the transmission. In file management, a header is a region at the beginning of each file where bookkeeping information is kept. The file header may contain the date the file was created, the date it was last updated, and the file's size. The header can be accessed only by the operating system or by specialized programs.

A traffic flow discloses the load on a communications device or system. One of the principal jobs of a system administrator is to monitor traffic levels and take appropriate actions when traffic becomes heavy.

The Ethernet is a local-area network (LAN) architecture developed by Xerox Corporation in cooperation with DEC and Intel in 1976. Ethernet uses a bus or star topology and supports data transfer rates of 10 Mbps. The Ethernet specification served as the basis for the IEEE 802.3 standard, which specifies the physical and lower software layers. Ethernet uses the CSMA/CD access method to handle simultaneous demands. It is one of the most widely implemented LAN standards.

A stream is an abstraction referring to any flow of data from a source (or sender, producer) to a single sink (or receiver, consumer). A stream usually flows through a channel of some kind, as opposed to packets which may be addressed and routed independently, possibly to multiple recipients. Streams usually require some mechanism for establishing a channel or a "connection" between the sender and receiver.

VLAN, which is short for virtual LAN, comprises a network of computers that behave as if they are connected to the same wire even though they may actually be physically located on different segments of a LAN. VLANs are configured through software rather than hardware, which makes them extremely flexible. One of the biggest advantages of VLANs is that when a computer is physically moved to another location, it can stay on the same VLAN without any hardware reconfiguration.

ATM is short for Asynchronous Transfer Mode and describes a network technology based on transferring data in cells or packets of a fixed size. The cell used with ATM is relatively small compared to units used with older technologies. The small, constant cell size allows ATM equipment to transmit video, audio, and computer data over the same network, and assure that no single type of data hogs the line.

MAC address, which is short for Media Access Control address, is a hardware address that uniquely identifies each node of a network. In IEEE 802 networks, the Data Link Control (DLC) layer of the OSI Reference Model is divided into two sublayers: the Logical Link Control (LLC) layer and the Media Access Control (MAC) layer. The MAC layer interfaces directly with the network medium. Consequently, each different type of network medium requires a different MAC layer.

In networks a switch describes a device that filters and forwards packets between LAN segments. Switches operate at the data link layer (layer 2) and sometimes the network layer (layer 3) of the OSI Reference Model and therefore support any packet protocol. LANs that use switches to join segments are called switched LANs or, in the case of Ethernet networks, switched Ethernet LANs.

An aggregation switch is a device, which is designed to fit into a single data center rack. It is intended for companies with two or three-tier data center architectures.

Upstream discloses a transmission from an end user to a server. An upstream transmission can be in the form of a signal being transmitted from a workstation to a server across a network, such as a LAN, or a signal being sent from a customer to a cable service provider.

Downstream describes a transmission from a server to an end user. A downstream transmission can be in the form of a signal being transmitted from a server to a workstation across a network, such as a LAN, or a signal being sent from a cable service provider to a customer.

VoIP is short for Voice over Internet Protocol and includes a category of hardware and software that enables people to use the Internet as the transmission medium for telephone calls by sending voice data in packets using IP rather than by traditional circuit transmissions of the PSTN.

TDM is short for Time Division Multiplexing and describes a type of multiplexing that combines data streams by assigning each stream a different time slot in a set.

References to the corresponding chapters in the standard:
As mentioned, the "transmission and convergence layer" (TC layer) is described in the ITU-T Recommendation G.984.3 (02/2004) "Gigabit-capable Passive Optical Networks (G-PON): "Transmission convergence layer specification".

Figure 5-1/G984.3 - "Embedded GEM" shows the assembly of the GEM layer between OLT and ONT in a PON network.

On page 10, Figure 5-3/"G984.3 Multiplexing in GEM service" shows the mapping hierarchy between PON-link, ONUs, T-CONT and ports. A port corresponds here to a GEM port, which itself is mapped to a traffic flow. This traffic flow is characterised by a user-port or by the target and by the Class of Service (CoS).

The GPON transmission and Convergence Layer is completely described in the ITU T Recommendation, from page 14 on. GPON as multi service approach is next to the transmission of Ethernet frames also specified for the transport of ATM or TDM traffic. The invention notification relates just to GEM (GPON Encapsulation Mode) for the transmission of Ethernet Frames. We are also still able to zoom into the frame and find on page 28, chapter 8.1.4.2, the description of the GEM partition for the downstream (OLT to ONT traffic.

Quotation "The downstream frame stream is then filtered at the ONU based upon the 12-bit Port-ID field contained in each frame fragment. ONTs are configured to recognize which Port-IDs belong to it, and frames that do belong to the ONU are passed on to the GEM client process."

The invention notification is about the selection of this "12-bit Port-ID" in the OLT. Figure 8-12 on page 32 shows the assembly of a GEM frame in upstream direction. The GEM header is specified in more detail on page 34, figure 8-14. Here we see the "Port ID 12 bit" that matters.

However negative for the prior art methods is the fact that different traffic flows according to the GPON-Standard and therefore different GEM ports for different priorities are often the result.

In downstream direction (OLT to ONT), on the OLT, the Ethernet frame in PON direction also has to be packed into a GEM frame. For this, the correct GEM port ID has to be chosen in the OLT. For this as starting point, available tables and the information from the frame itself can be used.

In the Ethernet, traffic-flow through the VLAN ID and/or the MAC target address is characterized. The mapping table VLAN-ID to GEM port or MAC destination address (MAC-DA) to GEM port can be firmly configured or dynamically learned by means of the upstream traffic.

Problematic is here the additional differentiation of the GEM port by means of the priority. With dynamic learning by means of the upstream traffic, you cannot always act on the assumption that upstream is a corresponding traffic with the appropriate priority and is so preceded with the correct priority bits.

For example, with VOIP, you can act on the assumption that, first of all in upstream direction a login took place at a central sever. However, at a later point in time downstream traffic can be initiated from network direction, with a totally different priority. When you learned upstream the relation MAC source address (MAC-SA) and priority to GEM port ID, you would not find, in downstream direction, with the key MAC-DA and priority, an entry.

As further disadvantage, also at the time of the configuration of a mapping table, it is not always known, which priorities are necessary for which user.

Just configurable relations VLAN-ID/priority for the downstream mapping are used. With this method, the operator has to already know at the setup, all possible priorities. New priorities would always involve new configuration actions afterwards. For each learned MAC address und/or VLAN-ID automatically 8 entries (for each possible priority) are automatically entered into the mapping table. Since not always all 8 priorities are being used, unnecessary space in the mapping table is required.

The priority is not taken into account for the mapping in downstream direction. In upstream direction the priorities have to be taken into account, when choosing the GEM ports, for the following reason. The GEM port is mapped to a T-CONTs. Whereas a GEM port cannot be mapped to multiple T-CONTs. The CoS treatment in the PON on the other hand, happens by means of the T_CONTs.

When choosing the traffic-flow downstream, the priority is not taken into account, an asymmetric traffic-flow into up-and downstream direction would evolve, which also contradicts the standard requirements.

It is the object of the invention provide the aforementioned method, in such a manner that the above mentioned problems and disadvantages of the prior art methods are solved or at least reduced.

The solution of this invention is provided by a method, according to the invention, according to the characterizing part of claim 1, whereas the GEM port ID is structured, wherein a part is mapped to the layer 2 addressing and wherein another part relates to a priority. In upstream direction on the OLT , just a part of the GEM port ID in a mapping table is saved. In downstream direction, by means of a Source-MAC and/or a VLAN-ID, a corresponding part of the GEM port ID is read out from the mapping table.

An advantageous embodiment of the method according to the invention is the fact that a number n, of bits that have to be copied, can be chosen between 0 and 3.

Preferably a CoS (Class of Service) independent area of the GEM port ID is determined in accordance with the destination MAC address, from the previously learnt mapping table.

Another beneficial embodiment of the method according to the invention is the fact that CoS (Class of Service) dependent part is directly copied from a VLAN Tagof the Ethernet Frames.

Preferably the size of the part of the GEM port ID, which is mapped to the priority, can be configured.

An advantageous embodiment of the method according to the invention is the fact that the part f the GEM port ID, which is mapped to the priority, is directly copied from the Ethernet frame into the therefore provided part of the GEM port ID.

### Detailed Description of the Invention

The invention will be further described with reference to the accompanying drawings.

### Brief Description of the Drawings

Figure 1 describes how in upstream direction on the OLT, just a part of the GEM port ID in the table is saved, according to the invention.
Figure 2 shows an example of the mapping between the GPON and the Ethernet frame, according to the invention.

### Detailed Description of the Drawings

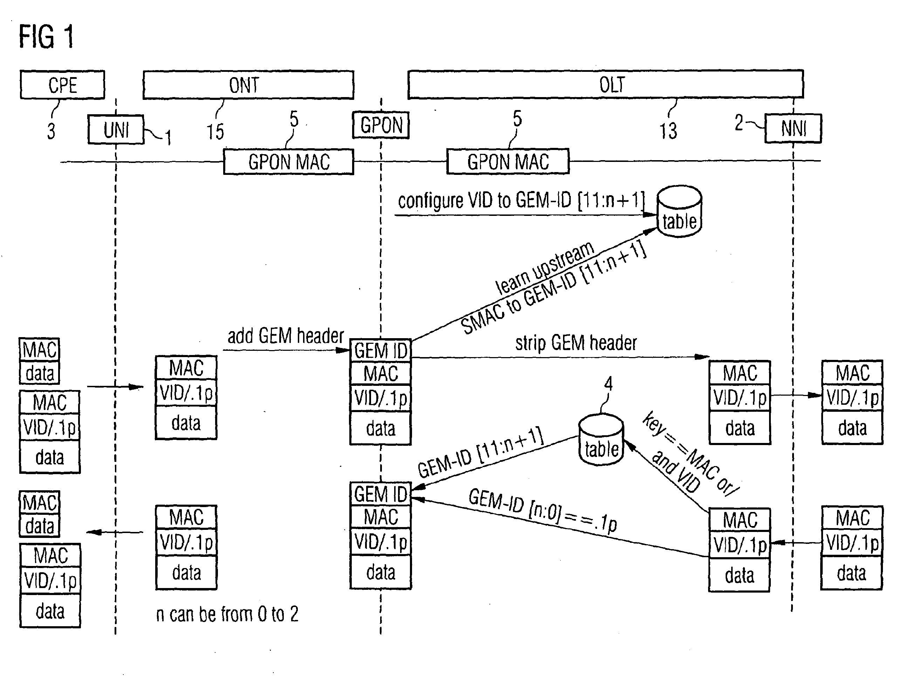

In figure 1 it can be seen, that in upstream direction on the OLT (13), just a part of the GEM port ID (9) in the table is saved. In upstream direction on the OLT (13), just a part of the GEM port ID (9) in the table is saved. The same method can also be used in combination with configured data. That is, just the relation of a key (for example VLAN-ID and/or MAC address (18)) to a part of the GEM port ID (9) is entered in the table. In downstream direction, by means of the Source-MAC and/or the VLAN-ID, the corresponding part of the GEM port ID (9) is read out from the mapping table (4).

The part which is mapped to the priority (19), is directly copied from the frame into the therefore provided part of the GEM port ID (9). How big the part of the GEM port ID (9) is, which is mapped to the priority (19), can be configured. That is, the structure is variable in borders.

Independently from the concrete implementation in the ONT (15) (structured or freely configurable), a corresponding configuration can be chosen in the ONT (15) which fits to the described method in the OLT (13). Also, the eligibility of the area in the GEM port ID (9) secures the compatibility with different ONT (15) implementations.

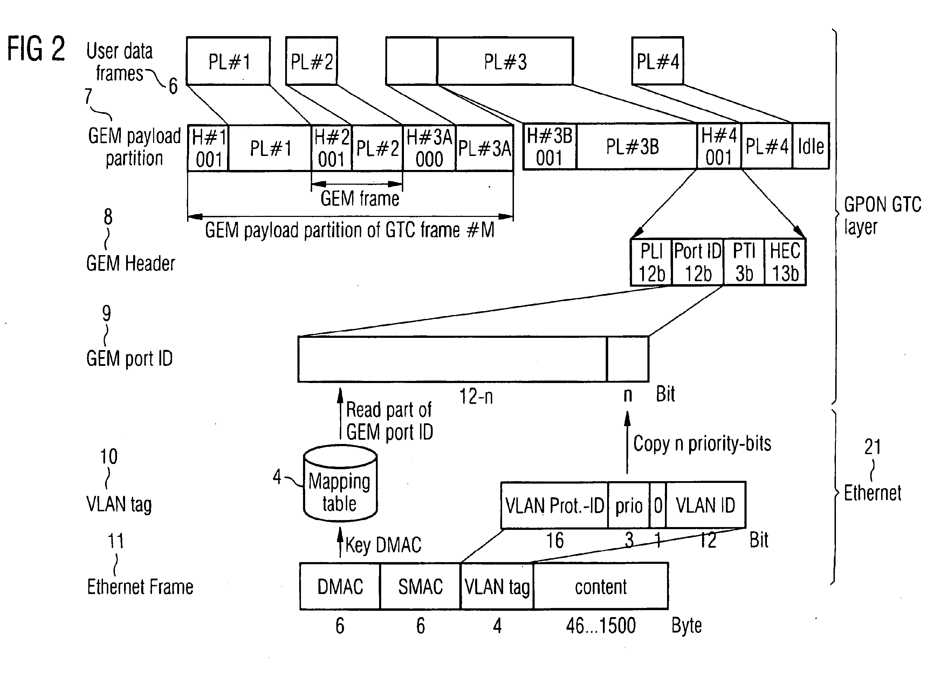

Figure 2 illustrates a mapping table (4) destination MAC address (18) to GEM port (16), according to the invention ID. The table can be learned dynamically from the frames in upstream direction. In figure 2 it is acted on the assumption that the CoS independent area of the GEM port ID (9) is determined in accordance with the destination MAC address (18), from a previously learned mapping table (4). The CoS dependent part is directly copied from the VLAN Tag (10) of the Ethernet Frames (11). In figure 2 it can also be seen that the number n of bits, that have to be copied, can be chosen between 0 and 3 freely.

### Reference signs

- n: number of bits in the GEM port ID (9), which is mapped to the priority (19) (n = 0 bis 3)
- 1: UNI / interface to the customer
- 2: NNI / interface to the network
- 3: CPE / device to the customer
- 4: mapping table
- 5: GPON MAC (G Passive Optical Network Media Access Control)
- 6: user data frame
- 7: GEM payload partition
- 8: GEM header
- 9: GEM port ID
- 10: VLAN tag (V Local Area Network tag)
- 11: Ethernet frame
- 12: Ethernet stream
- 13: OLT (Optical Line Termination)
- 14: GPON network
- 15: ONT (Optical Network Terminals)
- 16: GEM port
- 17: layer 2 addressing (MAC/VID)
- 18: MAC address
- 19: priority
- 20: user
- 21: Ethernet

## Claims

1. A method for addressing Ethernet streams by means of a structured GEM Port ID, wherein
an implementation in an OLT as part of a GPON network is provided,
in a GPON network, between an ONT and the OLT, an Ethernet frame is transported,
the Ethernet frame is encapsulated in a GEM layer,
the Ethernet frame is addressed in a GEM header, through a GEM port ID,
**characterized in that,**
• the GEM port ID (9) is structured, wherein a part is mapped to the layer 2 addressing and wherein another part relates to a priority,
• in upstream direction on the OLT (13), just a part of the GEM port ID (9) in a mapping table (4) is saved,
• in downstream direction, by means of a Source-MAC and/or a VLAN-ID, the corresponding part of the GEM port ID (9) is read out from the mapping table (4).

2. A method according to claim 1, wherein the part relating to the priority is directly copied from the Ethernet frame and a number n of bits that have to be copied can be chosen between 0 and 3.

3. A method according to claim 1 or 2, wherein a CoS, Class of Service, independent area of the GEM port ID (9) is determined in accordance with a destination MAC address, from the previously learnt mapping table (4).

4. A method according to claim 1 or 2, wherein a CoS, Class of Service, dependent part is directly copied from a VLAN Tag (10) of the Ethernet Frames (11).

5. A method according to any one of claims 1 to 4, wherein the size of the part of the GEM port ID (9), which is mapped to the priority, can be configured.

6. A method according to any one of claims 1 to 5, wherein the part of the GEM port ID (9), which is mapped to the priority, is directly copied from the Ethernet frame (11) into the therefore provided part of the GEM port ID (9).

## Patentansprüche

1. Verfahren zum Adressieren von Ethernet-Streams mittels einer strukturierten GEM Port ID, wobei
eine Implementierung in einem OLT als Teil eines GPON-Netzwerks vorgesehen wird,
in einem GPON-Netzwerk zwischen einem ONT und dem OLT ein Ethernet-Rahmen transportiert wird,
der Ethernet-Rahmen in eine GEM-Schicht eingekapselt wird,
der Ethernet-Rahmen durch eine GEM Port ID in einem GEM-Header adressiert wird,
**dadurch gekennzeichnet, dass**
• die GEM Port ID (9) strukturiert ist, wobei ein Teil auf die Adressierung der Schicht 2 abgebildet wird und wobei ein anderer Teil eine Priorität betrifft,
• in der Upstream-Richtung auf dem OLT (13) nur ein Teil der GEM Port ID (9) in einer Abbildungstabelle (4) abgespeichert wird,
• in der Downstream-Richtung mittels einer Quellen-MAC und/oder einer VLAN-ID der entsprechende Teil der GEM Port ID (9) aus der Abbildungstabelle (4) ausgelesen wird.

2. Verfahren nach Anspruch 1, wobei der die Priorität betreffende Teil direkt aus dem Ethernet-Rahmen kopiert wird und eine Anzahl n von Bit, die kopiert werden müssen, zwischen 0 und 3 gewählt werden kann.

3. Verfahren nach Anspruch 1 oder 2, wobei ein von der CoS bzw. Class of Service unabhängiger Bereich der GEM Port ID (9) gemäß einer Ziel-MAC-Adresse aus der zuvor erlernten Abbildungstabelle (4) bestimmt wird.

4. Verfahren nach Anspruch 1 oder 2, wobei ein von der CoS bzw. Class of Service abhängiger Teil direkt aus einem VLAN Tag (10) der Ethernet-Rahmen (11) kopiert wird.

5. Verfahren nach einem der Ansprüche 1 bis 4, wobei die Größe des Teils der GEM Port ID (9), der auf die Priorität abgebildet wird, konfiguriert werden kann.

6. Verfahren nach einem der Ansprüche 1 bis 5, wobei der Teil der GEM Port ID (9), der auf die Priorität abgebildet wird, direkt aus dem Ethernet-Rahmen (11) in den dafür vorgesehenen Teil der GEM Port ID (9) kopiert wird.

## Revendications

1. Procédé d'adressage de flux Ethernet au moyen d'un ID de Port GEM structuré, dans lequel
une mise en oeuvre dans une OLT comme partie d'un réseau GPON est prévue,
dans un réseau GPON, entre une ONT et l'OLT, une trame Ethernet est transportée,
la trame Ethernet est encapsulée dans une couche GEM,
la trame Ethernet est adressée dans un en-tête GEM, par l'intermédiaire d'un ID de port GEM,
**caractérisé en ce que**
• l'ID de port GEM (9) est structuré, dans lequel une partie est mappée sur l'adressage de couche 2 et dans lequel une autre partie se rapporte à une priorité,
• dans un sens ascendant sur l'OLT (13), seulement une partie de l'ID de port GEM (9) dans une table de mappage (4) est enregistrée,
• dans un sens descendant, au moyen d'un MAC de Source et/ou d'un ID de VLAN, la partie correspondante de l'ID de port GEM (9) est lue à partir de la table de mappage (4).

2. Procédé selon la revendication 1, dans lequel la partie se rapportant à la priorité est directement copiée à partir de la trame Ethernet et un nombre n de bits qui doivent être copiés peut être choisi entre 0 et 3.

3. Procédé selon la revendication 1 ou 2, dans lequel une zone indépendante de la CoS, Classe de Service, de l'ID de port GEM (9) est déterminée conformément à une adresse MAC de destination, à partir de la table de mappage (4) préalablement apprise.

4. Procédé selon la revendication 1 ou 2, dans lequel une partie dépendante de la CoS, Classe de Service, est directement copiée à partir d'une balise de VLAN (10) des trames Ethernet (11).

5. Procédé selon l'une quelconque des revendications 1 à 4, dans lequel la taille de la partie de l'ID de port GEM (9), qui est mappée sur la priorité, peut être configurée.

6. Procédé selon l'une quelconque des revendications 1 à 5, dans lequel la partie de l'ID de port GEM (9), qui est mappée sur la priorité, est directement copiée à partir de la trame Ethernet (11) dans la partie de l'ID de port GEM (9) prévue à cette fin.
